Europäisches Patentamt

European Patent Office

Office européen des brevets

(19)

(11) Veröffentlichungsnummer: **0 344 824**
**B1**

(12) **EUROPÄISCHE PATENTSCHRIFT**

(45) Veröffentlichungstag der Patentschrift: **30.01.91**

(51) Int. Cl.⁵: **E 03 F 3/06, F 16 L 55/16**

(21) Anmeldenummer: **89114356.2**

(22) Anmeldetag: **13.02.85**

(60) Veröffentlichungsnummer der früheren Anmeldung nach Art. 76 EPÜ: **0 158 042**

(54) **Verfahren zum Einbau von Kunststoffrohrstücken in zu sanierende Abwasserrohre.**

(30) Priorität: **09.04.84 DE 3413294**

(43) Veröffentlichungstag der Anmeldung:
**06.12.89 Patentblatt 89/49**

(45) Bekanntmachung des Hinweises auf die Patenterteilung:
**30.01.91 Patentblatt 91/05**

(84) Benannte Vertragsstaaten:
**AT BE CH DE FR GB IT LI LU NL SE**

(56) Entgegenhaltungen:
**WO-A-82/04086**
**WO-A-83/02490**
**GB-A-2 041 147**

(73) Patentinhaber: **KWH Pipe Anlagentechnik GmbH**
**Daimlerstrasse 5 - 7**
**D-4156 Willich (DE)**

(72) Erfinder: **Jürgenlohmann, Peter**
**Rembrandtweg 13a**
**D-4830 Gütersloh 11 (DE)**
Erfinder: **Schröder, Günter**
**Riesenbusch 14**
**D-2407 Bad Schwartau (DE)**

(74) Vertreter: **Patentanwälte Dipl.-Ing. Bodo**
**Thielking Dipl.-Ing. Otto Elbertzhagen**
**Gadderbaumer Strasse 20**
**D-4800 Bielefeld 1 (DE)**

EP 0 344 824 B1

Courier Press, Leamington Spa, England.

**Beschreibung**

Die Erfindung betrifft ein Verfahren zum Einbau von Kunststoffrohrstücken in zu sanierende Abwasserrohre mit seitlichem Abgang, wobei an den Kunststoffrohrstücken eine seitliche Abgangsöffnung angebracht wird, die bei eingebautem Kunststoffrohrstück an der Stelle des Abgangs liegt.

Das Einbringen von Rohrstücken, z. B. Kurzrohren, in zu sanierende Abwasserrohrleitungen, ist überall dort unproblematisch, wo eine durchgehende Strecke ohne seitliche Abgänge vorliegt. In diesem Fall kann die Sanierung ohne äußere Erdarbeiten von den Kanalschächten aus vorgenommen werden.

Problematisch ist hingegen die Sanierung an Stellen der Abwasserrohre, die seitliche Abgänge aufweisen, beispielsweise für Hausanschlüsse. Damit solche Hausanschlüsse mit dem innenliegenden Kunststoffrohr verbunden werden können, ist es erforderlich, einen seitlichen Durchbruch im innenliegenden Rohr vorzusehen und diesen Durchbruch in die richtige Position einzubauen. Dabei ist es wesentlich, daß während des Einbauvorgangs und danach sowohl eine Sperrung des Abzweigs möglichst kurzzeitig gehalten oder vollständig vermieden werden soll. Es muß dabei dafür gesorgt werden, daß nicht an der Abzweigstelle Abwasser in den Ringraum zwischen dem innenliegenden Kunststoffrohr und die Innenwand des zu sanierenden Außenrohrs gelangen kann. Außerdem muß sichergestellt werden, daß bei einem Verfüllen des Ringraums das Füllmaterial nicht vor dem Aushärten in den Abzweig oder das neue Rohr gelangt.

Die Lösung dieser Aufgabe erfolgt dadurch, daß die seitliche Abgangsöffnung des Kunststoffrohrstücks auf der Außenseite des Kunststoffrohrstücks von einer expandierbaren Manschette umgriffen ist, die nach dem ausgerichteten Einbau expandiert wird und, eine umlaufende Absperrung bildend, den Ringspalt zwischen der Außenseite des Kunststoffrohrstücks und der Innenseite des Abwasserrohrs im Bereich neben der Abgangsöffnung ausfüllt.

Bei einer bevorzugten Ausführungsform wird die Manschette verfüllt.

Es hat sich ferner als zweckmäßig erwiesen, daß die Manschette mit Kunststoff verfüllt wird.

Bei dem erfindungsgemäßen Verfahren verbleibt die Manschette in ihrer Einbaulage. Sie wird also nicht nach dem Aushärten der Ringraumverfüllung, die üblicherweise mit Beton oder betonähnlichen Materialien erfolgte, wieder entfernt.

Durch die Verfüllung der Manschette mit Kunststoff ergibt sich eine Erhöhung der Sicherheit. Eine sichere Abdichtung des Ringraums ist bei einer derartigen Manschette auch dann gewährleistet, wenn aus verschiedenen Gründen entweder der Ringraum nicht ordnungsgemäß vollständig verfüllt worden ist oder nicht ordnungsgemäß verfüllt werden konnte oder wenn sogar absichtlich auf eine Verfüllung des Ringraums verzichtet werden soll.

Nachstehend wird ein Ausführungsbeispiel der Erfindung anhand der Zeichnung im einzelnen erläutert.

Es zeigen.

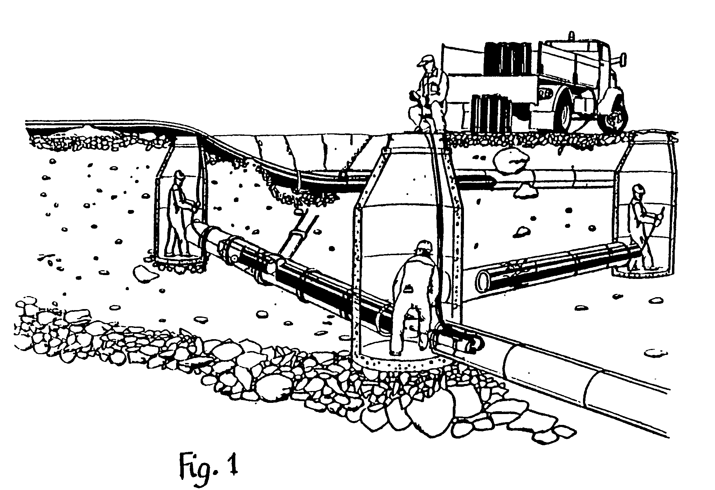

Figur 1 eine schematische Darstellung einer Baustelle zum Sanieren von Abwasserleitungen mit kurzen Kunststoffrohrstücken,

Figur 2 einen Längsschnitt durch eine Abzweigstelle mit eine Transportvorrichtung und Kunststoffrohrstücken,

Figur 3 die Darstellung gemäß Figur 2 bei aufgeschobenem Kunststoffrohrstück und expandierter Manschette,

Figur 4 eine schematische Seitenansicht der Transportvorrichtung,

Figur 5 eine schematische Draufsicht auf die Transportvorrichtung,

Figur 6 eine schematische Stirnansicht der Transportvorrichtung ohne Rohrstücke im zu sanierenden Abwasserrohr.

Ein zu sanierendes Abwasserrohr F weist einen Abgang oder Abzweig G auf. Mit A ist das bereits fertig eingebaute Kunststoffrohrstück bezeichnet, das benachbart zum Abgang G endet. Eine Transportvorrichtung C, die im dargestellten Ausführungsbeispiel auf Rädern läuft, trägt eine Aufnahme 1 mit mehreren radial sich nach außen erstreckenden Armen 1a, die das einzubauende Kunststoffrohrstück B fest von innen erfassen. Die Achse der Aufnahme 1 erstreckt sich parallel zur Rohrachse. Die Transportvorrichtung C wird entweder über eine Schubstange 15 oder über ein Zugseil 18 gemeinsam mit dem aufgeschobenen Kunststoffrohrstück B in Achsrichtung bewegt.

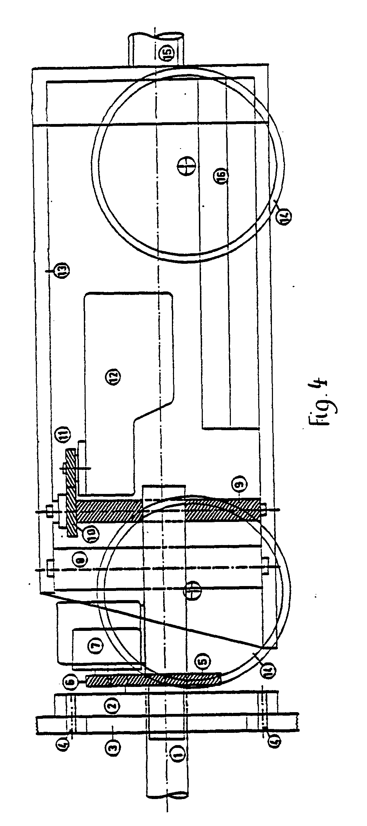

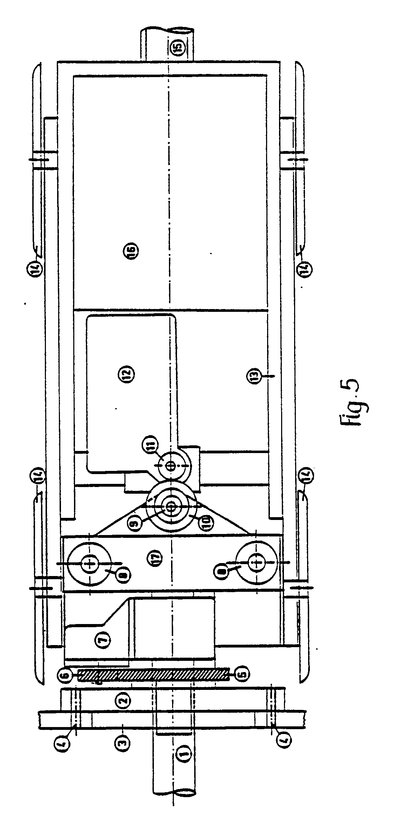

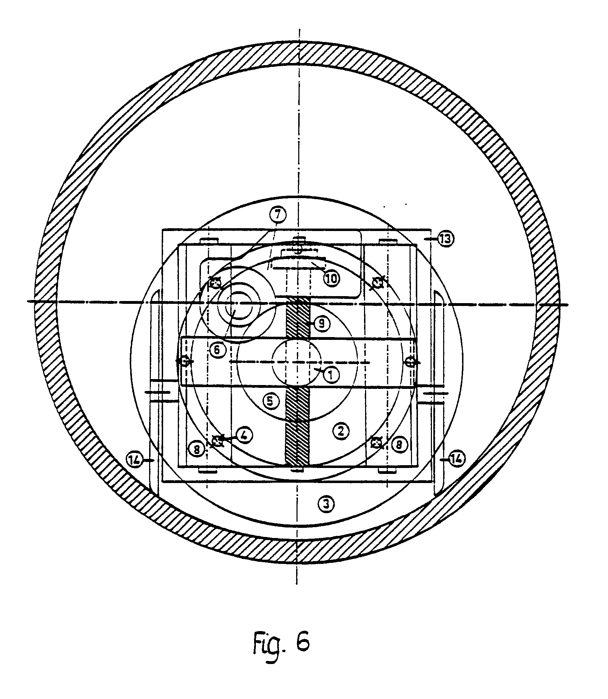

Die Aufnahme 1 für das einzubauende Kunststoffrohrstück B kann über einen ersten Antriebsmotor 7 verdreht und über einen weiteren Antriebsmotor 12 quer zur Rohrachse verfahren werden. Einzelheiten dieser Antriebe werden im Zusammenhang mit Figuren 4 bis 6 nachstehend erläutert.

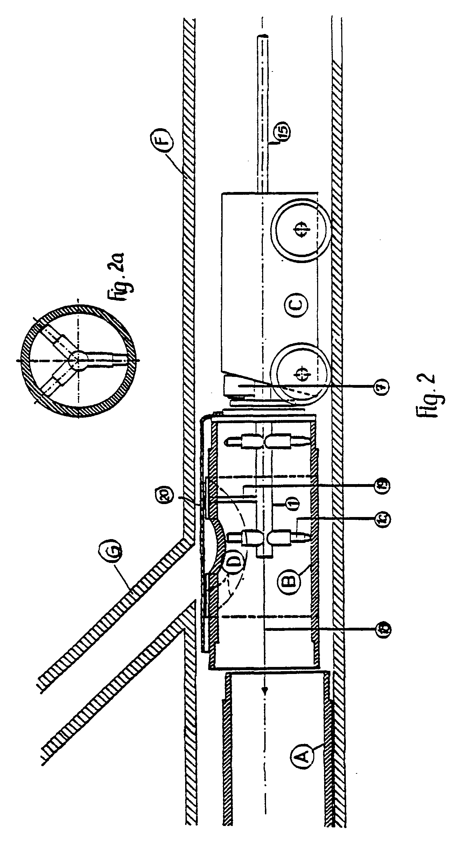

Die Abgangsöffnung E des einzubauenden Kunststoffrohrstücks ist von einer zunächst flach liegenden Manschette D umgeben. Diese Manschette kann (vgl. Figur 2) von einer Schutzhaube 20 überdeckt werden, die sicherstellt, daß die flach liegende Manschette beim Transport durch das zu sanierende Abwasserrohr nicht mechanisch beschädigt wird.

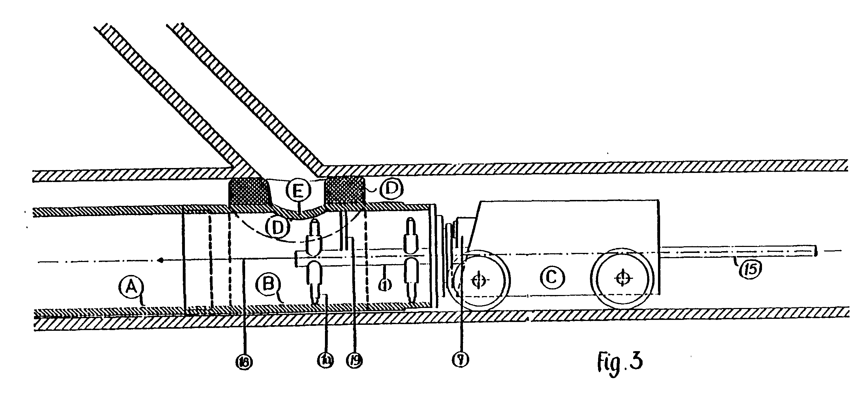

Bei der Ausführungsform gemäß Figur 3 ist eine Schutzhaube nicht vorgesehen.

Nach dem genauen Ausrichten der Abgangsöffnung E zum Abzweig G wird das Kunststoffrohrstück B auf das Ende des bereits eingebauten Kunststoffrohrstücks A geschoben. Danach wird die Manschette D über eine Füllleitung 19 mit Kunststoff oder einem anderen Füllmaterial befüllt. Durch die Anordnung der expandierten Manschette D ist der die Abgangsöffnung E umgebende Bereich des Ringraums zwischen dem Kunststoffrohrstück B und dem zu sanierenden Abwasserrohr F ausgefüllt. Es ist damit sichergestellt, daß kein Abwasser auf die Außenseite des Kunststoffrohrs gelangen kann.

In den Zeichnungsfiguren 4 bis 6 ist die insgesamt mit C bezeichnete Transportvorrichtung genauer dargestellt. Von der Aufnahme 1 ist in diesen Zeichnungsfiguren lediglich das zentrale Mittelstück sichtbar.

Die Aufnahme 1 besitzt eine stirnseitig angeordnete Platte 2, an der mit Hilfe von Befestigungsschrauben 4 auswechselbare, als Anschlagplatten ausgebildete Anschläge 3 anschraubbar sind. Die unterschiedlichen Durchmesser der Anschlagplatten 3 sind erforderlich für unterschiedliche Kunststoffrohrdurchmesser.

Die Platte 2 ist um eine zentrale Achse drehbar an der Transportvorrichtung C gelagert. Gleichachsig mit der Platte 2 ist ein Zahnrad 5 gelagert, das mit einem Antriebsrad 6 im Eingriff steht. Das Antriebsrad 6 wird von einem elektrischen Antriebsmotor 7 angetrieben, der nach beiden Seiten drehen kann. Mit diesem Antriebsmotor 7 kann das Verdrehen des einzubauenden Kunststoffrohrstücks ferngesteuert erfolgen.

Der Antriebsmotor 7 und die Aufnahme mit Drehantrieb sind an einer Führungstraverse 17 befestigt, die auf zueinander parallel angeordneten Führungen 8 verfahrbar ist. Parallel zu den Führungen 8 erstreckt sich eine Spindel 9, die mit einer Spindelmutter an der Führungstraverse 17 im Eingriff steht. Am oberen Ende der Spindel 9 ist ein Zahnrad 10 fest mit der Spindel verbunden. Das Zahnrad 10 steht mit dem Antriebsrad 11 eines zweiten Antriebsmotors 12 im Eingriff.

Der Antriebsmotor 12 kann in beide Richtungen drehen. Hierdurch erfolgt ein entsprechendes Verdrehen der Spindel und damit ein Anheben oder Absenken der Führungstraverse. Es wird dabei das in der Aufnahme 1 gehaltene Kunststoffrohrstück entsprechend aufwärts oder abwärts verfahren.

Mit 14 sind die Laufräder der Transportvorrichtung bezeichnet. Statt Laufrädern können auch Kufen vorgesehen sein. Am hinteren Ende der Transportvorrichtung C ist ein Schubgestänge 15 dargestellt, das ebenso wie das alternativ in Figuren 2 und 3 dargestellte Zugseil 18 zum Verfahren der Transportvorrichtung C verwendet werden kann.

In der Schubstange 15 sind auch die verschiedenen Versorgungsleitungen enthalten, unter anderem die Versorgungsleitung, die über eine Fülleitung 19 Kunststoff in das Innere der Manschette D fördern kann.

Mit 16 ist Ballast bezeichnet, der sicherstellt, daß die Transportvorrichtung nicht unter dem Gewicht des Kunststoffrohrstücks und der Aufnahme nach vorne abkippt.

Wenn — wie bei der Auführungsform gemäß Figur 2 — die Schutzhaube 20 vorgesehen ist, muß zunächst die Transportvorrichtung nach Einziehen der Spreizarme 1a nach rechts, also zurückgefahren werden, bevor das Expandieren der Manschette D vorgenommen werden kann. Bei einer solchen Konstruktion ist eine andere Art der Fülleitung erforderlich als in den Figuren 2 und 3 dargestellt, beispielsweise eine flexible Fülleitung.

## Patentansprüche

1. Verfahren zum Einbau von Kunststoffrohrstücken in zu sanierende Abwasserrohre mit seitlichem Abgang, wobei an den Kunststoffrohrstücken eine seitliche Abgangsöffnung angebracht wird, die bei eingebautem Kunststoffrohrstück an der Stelle des Abgangs liegt, dadurch gekennzeichnet, daß die seitliche Abgangsöffnung (E) des Kunststoffrohrstücks (B) auf der Außenseite des Kunststoffrohrstücks von einer expandierbaren Manschette umgriffen ist, die nach dem ausgerichteten Einbau expandiert wird und, eine umlaufende Absperrung bildend, den Ringspalt zwischen der Außenseite des Kunststoffrohrstücks (B) und der Innenseite des Abwasserrohrs (F) im Bereich neben der Abgangsöffnung (E) ausfüllt.

2. Verfahren nach Anspruch 1, dadurch gekennzeichnet, daß die Manschette (D) verfüllt wird.

3. Verfahren nach Ansprüchen 1 und 2, dadurch gekennzeichnet, daß die Manschette (D) mit Kunststoff verfüllt wird.

## Revendications

1. Procédé d'incorporation de tuyaux en matières plastiques dans des canalisations d'égouts à assainir avec sortie latérale, les tuyaux en matière plastique à incorporer étant à pourvoir d'un orifice de sortie latéral, situé à l'emplacement de la sortie lorsque le tuyau en matière plastique est incorporé, caractérisé par le fait que l'orifice de sortie latéral (E) du tuyau en matière plastique (B) est enserré, côté extérieur du tuyau en matière plastique, par une manchette expansible, qui, expansée après que l'incorporation ait été terminée et formant un calfeutrage, remplit l'espace circulaire entre la surface externe du tuyau en matière plastique (B) et la surface interne de la canalisation d'égout (F), dans le secteur de l'orifice de sortie (E).

2. Procédé selon revendication 1, caractérisé par le fait que la manchette (D) est remplie.

3. Procédé selon revendications 1 et 2, caractérisé par le fait que la manchette (D) est remplie de matière plastique.

## Claims

1. Method for installing synthetic pipe sections into drainage pipes being repaired or renewed and having side exits, whereby a side opening is made in the synthetic pipe section, the opening being located at the exit when the synthetic pipe section is fitted, characterized in that the side exit opening (E) of the synthetic pipe section (B) is surrounded by an expandable collar on the outside of the synthetic pipe section which is expanded after the pipe section has been brought into place and aligned and, by forming a surrounding seal, thus fills the annular passage between the exterior of the synthetic pipe section (B) and the interior wall of the drain pipe (F) in the area adjacent to the side exit opening (E).

2. Method according to Claim 1, characterized in that the collar (D) is backfilled.

3. Method according to Claims 1 and 2, characterized in that the collar (D) is backfilled with synthetic material.

Fig. 1

Fig. 2a

Fig. 2

Fig. 3

Fig. 4

4

Fig.5

Fig. 6